(19) Europäisches Patentamt
European Patent Office
Office européen des brevets

(11) **EP 1 288 760 B1**

(12) **FASCICULE DE BREVET EUROPEEN**

(45) Date de publication et mention
de la délivrance du brevet:
**17.10.2012 Bulletin 2012/42**

(51) Int Cl.:
***G05D 1/08*** *(2006.01)*     ***B64G 1/24*** *(2006.01)*

(21) Numéro de dépôt: **02292158.9**

(22) Date de dépôt: **02.09.2002**

(54) **Procédé de contrôle d'orbite autonome d'un satellite, et satellite en orbite contrôlé de facon autonome**

Verfahren zur autonomen Steuerung der Umlaufbahn eines Satelliten und in einer Umlaufbahn autonom gesteuerter Satellit

Method for autonomously controlling the orbit of a satellite and autonomously controlled orbiting satellite

(84) Etats contractants désignés:
**DE FR GB IT**

(30) Priorité: **04.09.2001 FR 0111426**

(43) Date de publication de la demande:
**05.03.2003 Bulletin 2003/10**

(73) Titulaire: **CENTRE NATIONAL D'ETUDES SPATIALES**
**75001 Paris (FR)**

(72) Inventeur: **Lamy, Alain**
**31500 Toulouse (FR)**

(74) Mandataire: **Poulin, Gérard et al**
**BREVALEX**
**95, rue d'Amsterdam**
**75378 Paris Cedex 8 (FR)**

(56) Documents cités:
**EP-A- 0 496 879     FR-A- 2 784 472**
**US-A- 3 866 025**

• **FOLTA D C ET AL: "A 3-D method for autonomously controlling multiple spacecraft orbits" AEROSPACE CONFERENCE, 1998 IEEE SNOWMASS AT ASPEN, CO, USA 21-28 MARCH 1998, NEW YORK, NY, USA,IEEE, US, 21 mars 1998 (1998-03-21), pages 51-60, XP010286997 ISBN: 0-7803-4311-5**

**Description**

**Domaine de l'invention**

L'invention concerne un procédé de contrôle d'orbite autonome d'un satellite, et un satellite dont l'orbite est contrôlée de façon autonome

**Etat de la technique**

Le maintien à poste d'un satellite est traditionnellement effectué au sol. Le procédé de l'invention a pour objectif d'adapter et d'optimiser les différentes tâches mises en oeuvre afin de les faire exécuter à bord du satellite, de manière à libérer le sol de certaines tâches répétitives, et de permettre de réaliser des manoeuvres plus fréquentes et donc d'amplitudes plus faibles.

La demande de brevet FR-A-2 784 472 décrit un système et un procédé destinés à maintenir de façon autonome l'orbite d'un engin spatial. Ce système et ce procédé utilisent un ou plusieurs accéléromètres qui fournissent en sortie des données indicatives de la variation de vitesse de l'engin spatial (valeur delta-v) due à la mise en oeuvre de son système de propulsion et d'autres forces externes telles que la pression solaire ou la traînée aérodynamique agissant sur celui-ci. L'engin spatial exécute de façon autonome un profil delta-v (variation de vitesse ou allumage de propulseurs) soit généré à bord de l'engin spatial par un ordinateur, soit téléchargé au moyen d'ordres émis vers l'engin spatial à partir d'une station au sol.

Comme dans tout contrôle d'orbite, l'objectif de l'invention est de maintenir certains paramètres d'orbite (ou certaines fonctions des paramètres d'orbite) à des valeurs de référence établies de façon à satisfaire une mission. Une manoeuvre est donc nécessaire quand au moins un des paramètres surveillés sort des marges de contrôle spécifiées. Cette manoeuvre peut être prévue à l'avance si l'on dispose de modèles d'évolution des paramètres surveillés. Plusieurs manoeuvres peuvent être prévues à la fois, par exemple dans le cas du contrôle de l'excentricité qui implique en général de réaliser deux manoeuvres à des endroits imposés l'un relativement à l'autre. C'est également le cas quand des effets prévisibles des manoeuvres apparaissent (dus par exemple à l'orientation particulière des tuyères).

Le brevet EP 0 496 879 décrit un système de commande pour maintenir de façon autonome un satellite sur une orbite désirée, le système comportant des moyens situés sur le satellite pour mesurer l'orbite réelle du satellite, des moyens de calcul de correction d'orbite, également situés sur le satellite, pour calculer périodiquement une correction de vitesse à appliquer au satellite, et des moyens pour appliquer la correction de vitesse calculée aux éjecteurs sur le satellite, pour effectuer une correction par modification de la vitesse.

L'inconvénient majeur d'un tel système est que les manoeuvres d'orbite sont appliquées à des intervalles de temps réguliers (par rapport à la période de l'orbite).

L'invention a pour objet de réaliser un procédé de contrôle d'orbite autonome d'un satellite dans lequel les manoeuvres sont calculées en prenant en compte des contraintes (comme l'appartenance à des créneaux de manoeuvre), et ainsi dans lequel elles sont réalisées à intervalles de temps irréguliers.

**Exposé de l'invention**

L'invention concerne un procédé de contrôle d'orbite autonome d'un satellite, à l'aide d'un système embarqué de restitution de la position et de la vitesse, ou navigateur, caractérisé en ce qu'il comprend :

- une étape de calcul de la (ou des) manoeuvre(s) (s) de corrections d'orbite en utilisant une orbite fournie par le navigateur et en prenant en compte au moins l'une des contraintes suivantes du système :

  • la durée minimale séparant le calcul de la manoeuvre de sa date d'exécution,
  • la durée minimale entre deux manoeuvres consécutives,
  • la correction maximale autorisée,
  • la variation maximale entre deux corrections successives,
  • les créneaux autorisés de manoeuvres,

- et éventuellement une étape de calibration des manoeuvres.

Les contraintes peuvent être définies et modifiées à la demande.
Les créneaux peuvent être définis :

• en temps,

- ou en position sur l'orbite et numéro d'orbite.

Ce procédé s'adapte aux contraintes de réalisation de manoeuvres et délivre des manoeuvres pouvant être non périodiques.

Avantageusement ce procédé comprend optionnellement une étape de calcul des manoeuvres d'attitude nécessaires pour placer le satellite dans une orientation convenable pour effectuer une manoeuvre de correction d'orbite.

Avantageusement l'étape de calcul des manoeuvres comprend :

- une identification des modèles d'évolution des paramètres d'orbite et des paramètres de contrôle,
- une prévision des manoeuvres calculées à partir de ces modèles et tenant compte des contraintes.

Les modèles d'évolution peuvent être obtenus par filtrage des paramètres d'orbite en provenance du navigateur. Le contrôle d'orbite peut ainsi avoir lieu même en présence de périodes d'indisponibilité des mesures.

Le filtrage des paramètres d'orbite peut s'effectuer en deux étapes :

- une étape de filtrage en fonction de la position sur l'orbite,
- une étape de filtrage des résultats de l'étape précédente en fonction du temps.

Avantageusement les paramètres contrôlés sont maintenus dans une fenêtre pouvant être de dimension fixe, ou de dimension calculée dynamiquement. Si la dimension de la fenêtre est trop petite, les manoeuvres sont calculées de telle sorte que l'évolution du paramètre soit centrée au mieux autour de la valeur nominale de celui-ci.

Avantageusement, dans une application réelle, le procédé de l'invention comprend les étapes suivantes :

- analyse des données provenant du récepteur, transformation des paramètres,
- filtrage court terme des données : détermination des valeurs "mesurées" des paramètres à contrôler et des paramètres d'orbite moyens,
- calcul des écarts entre la valeur mesurée et la valeur théorique du paramètre contrôlé,
- filtrage long-terme des données : détermination des modèles polynomiaux fonction du temps pour les paramètres contrôlés et les paramètres d'orbite moyens,
- calcul de la manoeuvre avec détermination de la prochaine opportunité de manoeuvre.

Les critères utilisés pour le contrôle d'orbite peuvent être choisis parmi :

- longitude des traces au sol,
- orientation du plan de l'orbite,
- position sur l'orbite (pour une orbite phasée ou non),
- certains paramètres d'orbite moyens : excentricité de l'orbite, demi-grand axe ...

Les corrections d'orbite peuvent être calculées de façon à rapprocher l'excentricité de l'excentricité de consigne.

Les critères utilisés pour le contrôle d'orbite peuvent être élaborés par rapport à une trajectoire de référence, qui peut être une trajectoire virtuelle.

Les manoeuvres calculées peuvent être prises en compte dans les modèles d'évolution et des erreurs prévisibles de réalisation de manoeuvre peuvent être prises en compte dans la confiance accordée aux modèles. Les erreurs estimées de modèle ou les erreurs prévisibles de réalisation de manoeuvre peuvent alors affecter la manoeuvre à réaliser.

Le filtrage des paramètres d'orbite permet à l'application bord de fonctionner même en présence de trous de mesures (absence de temps à autres des données de navigation utilisées en entrée du calcul de manoeuvre). La modélisation permet également de calculer des paramètres "moyens" qui servent notamment au contrôle de l'excentricité.

La présente invention concerne également un satellite en orbite comprenant un système embarqué de contrôle pour maintenir le satellite sur une orbite déterminée en présence de contraintes, ce système comprenant :

- un module de génération des données de navigation (récepteur GPS ou autre),
- un module de calcul de manoeuvre ($\Delta V$) comprenant le traitement des positions/vitesses et la détermination des modèles bord,
- un module de calcul des commandes de manoeuvre effective et d'application de la manoeuvre,

caractérisé en ce que le module de calcul de manoeuvre comprend des moyens de prise en compte d'au moins l'une des contraintes suivantes du système :

- durée minimale séparant le calcul de la manoeuvre de sa date d'exécution,
- durée minimale entre deux manoeuvres consécutives,
- correction maximale autorisée,
- variation maximale entre deux corrections successives,
- créneaux autorisés de manoeuvres.

Avantageusement, le module de calcul de manoeuvre est configurable au moyen d'un modèle externe, les paramètres de configuration consistant en :

- des paramètres de configuration des modèles,
- des paramètres décrivant l'évolution théorique du (des) paramètre(s) contrôlé(s),
- des paramètres d'erreur, ou des paramètres de réglage des traitements,
- des contraintes du calcul de manoeuvre,
- d'autres paramètres éventuels de configuration.

## Brève description des figures

La figure 1 illustre le contrôle d'orbite selon l'invention.
La figure 2 illustre l'enchaînement d'étapes du procédé de l'invention.

## Exposé détaillé de modes de réalisation

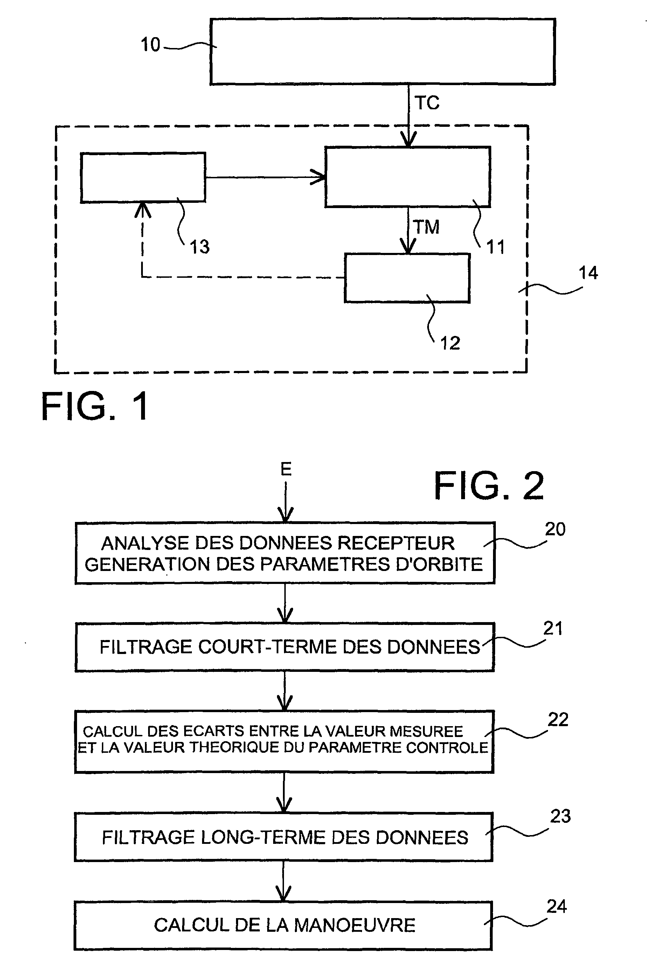

La figure 1 illustre le contrôle d'orbite autonome d'un satellite selon l'invention, dans son contexte.
Les critères utilisés pour le contrôle d'orbite à bord sont les mêmes que ceux utilisés pour le contrôle d'orbite au sol. Pour les orbites quasi-circulaires inclinées, il s'agit typiquement de contrôler les longitudes des traces au sol (pour garantir une répétitivité par rapport à la terre), l'excentricité (qui doit être souvent gelée pour satisfaire des contraintes d'altitude), et l'héliosynchronisme ou l'orientation du plan de l'orbite.
Sur la figure 1 sont illustrés :

- un module externe 10 de paramétrage du calcul de manoeuvre,
- un module 11 de traitement de position/vitesse, de calcul des modèles bord, de calcul des manoeuvres ($\Delta V$), les calculs réalisés étant indépendants du satellite,
- un module 12 de calcul des commandes de manoeuvre effective et d'application de la manoeuvre, le calcul réalisé étant dépendant du satellite,
- un module 13 de génération des données de navigation (récepteur GPS ou autre).

La zone 14 qui englobe les modules 11, 12 et 13 représente les parties implantées à bord du satellite.
Le module 11, qui représente la partie calcul de manoeuvre proprement dite, est générique, c'est-à-dire indépendant des caractéristiques particulières liées au satellite. C'est lui qui fait l'objet de l'invention, et qui est détaillé dans la suite.
Ce module de calcul de manoeuvre 11 reçoit les données de navigation du récepteur situé à bord du satellite. Les données de navigation sont constituées de la date, la position et la vitesse du satellite. Ces données peuvent être les "points récepteurs" bruts ou, préférentiellement le résultat d'un calcul de détermination d'orbite réalisé par un navigateur embarqué, ce qui permet de diminuer l'erreur sur ces données. Ces données sont également accompagnées d'indicateurs de validité et de confiance (écarts-types des erreurs sur les date, position, vitesse).
Le calcul des manoeuvres est configurable. Les données de configuration qui sont envoyées au module de calcul de manoeuvre 11, a priori depuis le sol, comprennent :

- des paramètres de configuration de modèles,
- des paramètres décrivant l'évolution théorique du (des) paramètre(s) contrôlé(s) (i.e les paramètres de consigne),
- des paramètres d'erreur, par exemple l'erreur de manoeuvre attendue pour la prise en compte des erreurs de manoeuvre dans les calculs, ou des paramètres de réglage des traitements,
- des contraintes du calcul de manoeuvre : délai minimum pour appliquer la manoeuvre à partir de la date de son calcul, incréments de vitesse minimaux/maximaux, intervalles pendant lesquels les manoeuvres sont réalisables (donnés sous la forme d'intervalles de date, ou d'intervalles de position sur l'orbite : numéro d'orbite et position angulaire cohérente), etc...,

- d'autres paramètres de configuration qui permettent par exemple de paramétrer diverses sorties auxiliaires.

Le module de calcul de manoeuvre 11 est constitué d'une interface générique (bibliothèque regroupant un nombre déterminé de fonctions) permettant d'appeler les services voulus et de récupérer les résultats du calcul : envoi des paramètres de configuration sous une forme banalisée (paramètres dits de "TC"), récupération des paramètres calculés sous une forme également banalisée (manoeuvre qui devra être exécutée et/ou autres paramètres internes quels qu'ils soient, y compris le paramétrage transmis), mise à disposition des données de navigation, appel à la fonction de prise en compte des données de navigation, sauvegarde/restauration du contexte d'exécution permettant une reprise ultérieure.

Cette interface peut ainsi être aisément mise en oeuvre à bord du satellite, de façon indépendante de l'environnement extérieur, et en particulier des caractéristiques particulières liées au satellite qui sont prises en compte dans le module d'exécution de manoeuvre 12.

On va à présent considérer un exemple de réalisation possible :

- le cas d'un satellite en orbite quasi-circulaire basse.

Calcul de manoeuvre dans le cas d'un satellite en orbite quasi-circulaire basse

Dans le cas de cette application, il n'y a qu'un paramètre principal contrôlé qui peut être la longitude du noeud ascendant, la date ou le demi-grand axe moyen. L'excentricité moyenne est contrôlée de façon indirecte par un choix judicieux de la position de manoeuvre. Dans le cadre de l'invention, le calcul de manoeuvre est alors issu de l'enchaînement des calculs illustrés sur la figure 2.

Sur cette figure le signal d'entrée E correspond aux données brutes issues du récepteur ou aux données issues du navigateur (date, position, vitesse, indicateur de validité et de confiance).

Les traitements ainsi réalisés sont détaillés schématiquement ci-dessous :

**A) Acquisition des données récepteur /génération des paramètres d'orbite (étape 20)**

On vérifie la validité des paramètres d'entrée, et on calcule les données qui seront utiles dans les traitements à venir :

- on transforme les position/vitesse en paramètres d'orbite (adaptés à l'orbite circulaire).
- on calcule le poids associé à ces paramètres en utilisant une formule simple fonction des indicateurs de confiance fournis (erreurs sur le temps T, la position P, la vitesse V). Le poids est alors calculé en divisant l'erreur globale par une valeur nominale.
- on rend l'argument de latitude dans les paramètres d'orbite non ambigu pour préparer l'étape suivante 21 de filtrage court-terme. Cela revient à calculer le numéro d'orbite cohérent avec l'argument de latitude en s'aidant d'un modèle d'évolution linéaire pour ce paramètre.

**B) Filtrage court-terme (étape 21)**

Cette étape a deux objectifs principaux :

- déterminer la valeur "mesurée" du (des) paramètre(s) contrôlé(s) par le maintien à poste.
- déterminer les paramètres d'orbite moyens "court-terme".

Les paramètres suivants : demi-grand axe, vecteur excentricité (ex, ey), inclinaison, ascension droite du noeud ascendant, date sont filtrés par rapport à la variable PSO (argument de latitude vrai rendu continu) pour obtenir les paramètres moyens ou osculateurs à une PSO vraie donnée. Le modèle utilisé pour le filtrage est la somme d'un polynôme et de termes harmoniques de périodes $2\pi$, $2\pi/2$, $2\pi/3$... Les paramètres moyens sont par définition les valeurs modélisées sans tenir compte des termes périodiques.

Les résultats (paramètres osculateurs et moyens sont obtenus à des positions vraies sur l'orbite de la forme $2k\pi/N$ (modulo $2\pi$), avec N (nombre de résultats par orbite) paramétrable. Dans le cas d'une utilisation standard N = 1.

**C) Ecarts entre valeur mesurée et valeur théorique du paramètre contrôlé (étape 22)**

Cette étape consiste à corriger les valeurs mesurées du (des) paramètre(s) à contrôler, et à ôter à cette valeur la valeur théorique (consigne du maintien à poste). On a ainsi:

- Calcul des corrections sur le paramètre contrôlé :

Deux types de corrections (optionnelles) sont appliquées :

- correction de l'effet des termes tesseraux du potentiel pour les paramètres "longitude du noeud ascendant" et "date" définie sous la forme d'une série harmonique paramétrable fonction de la longitude du noeud ascendant,
- correction additionnelle fonction de la PSO pour rendre conformes la valeur mesurée et la consigne (si N > 1),

- Calcul de l'écart de consigne, et de la variance associée :

La forme de la consigne dépend du paramètre contrôlé. La consigne de base est donnée sous la forme d'un modèle linéaire fonction du temps, ou fonction du numéro d'orbite, et de la PSO moyenne, suivant le paramètre contrôlé, auxquelles s'ajoute un terme non linéaire simulant approximativement l'effet du frottement atmosphérique pour les paramètres longitude du noeud ascendant ou date.

la variance $\sigma^2$ est calculée ainsi :

$$\sigma^2 \;=\; \sigma_0^2 \;/\; (W_{CT} \; x \; W_{mul})^2$$

$\sigma_0$ : valeur externe venant du paramétrage
$W_{CT}$ : poids obtenu en sortie du filtre court-terme
$W_{mul}$ : pondération supplémentaire dépendant de la position sur l'orbite valant 1 au noeud ascendant.

La valeur ainsi obtenue est supposée représentative de l'erreur effective sur le paramètre concerné.

**D. Filtrage long terme des paramètres (étape 23)**

Cette étape sert à la génération des modèles qui sont utilisés pour le calcul des manoeuvres. On utilise un modèle du même type que pour le filtrage court-terme (mais fonction du temps cette fois), incluant des termes périodiques de périodes paramétrables. Ces termes périodiques permettent d'éliminer facilement les effets de certaines perturbations sur les paramètres (par exemple de période 0,5 jour ou 1 jour). Les modèles qui sont utilisés en final sont des polynômes fonction du temps de degré inférieur ou égal à 2. Ces modèles sont associés à des covariances d'erreur issues du filtrage. Pour obtenir des covariances correctement dimensionnées pour les paramètres d'orbite, le bruit en entrée pour chaque paramètre d'orbite i est de la forme :

$$\sigma_i^2 = \sigma_{i0}^2 / (W_{CT})^2, \quad \text{avec :}$$

$\sigma_{i0}$ : valeur externe venant du paramétrage
$W_{CT}$ : poids obtenu en sortie du filtre court-terme

Les mesures aberrantes (au-delà de N sigmas) peuvent être rejetées optionnellement pour augmenter la confiance dans le résultat final.

**E. Calcul de la manoeuvre (étape 24)**

Le calcul de manoeuvre est déclenché quand un nouveau modèle pour l'écart de consigne est généré. Ce calcul est lui-même composé de trois sous-étapes :

- Détermination de la prochaine opportunité de manoeuvre :

C'est ici qu'intervient une contrainte importante du calcul de manoeuvre : les manoeuvres ne peuvent avoir lieu que dans les créneaux de manoeuvres, stockés à bord sous la forme d'un ensemble d'intervalles de date ou d'intervalles de numéro d'orbite et position moyenne sur l'orbite, les deux formes pouvant être déclarées périodiques ou non. Dans le cas où les créneaux sont périodiques, ceux-ci peuvent être montés à bord avantageusement une fois pour toutes.

Le créneau retenu par le calcul est celui dont la date de début est plus grande que la date courante plus une durée paramétrable (D), et à la date de la dernière manoeuvre plus une autre durée paramétrable.

Suivant la forme dans laquelle les créneaux sont définis, des conversions date <-> numéro d'orbite et position moyenne sur l'orbite sont réalisées en utilisant les modèles bord.

• Calcul de la manoeuvre :

La manoeuvre est calculée en utilisant les modèles bord des paramètres d'orbite et du paramètre contrôlé (modèles paraboliques ou linéaires fonction du temps).
On calcule d'abord la position de la manoeuvre en utilisant la valeur de consigne pour le vecteur excentricité moyenne (si cette consigne est définie), puis la date de la manoeuvre par conversion de la position.
Ensuite le module de la manoeuvre, supposée ici tangentielle, est calculé en analysant l'évolution de l'écart du paramètre contrôlé autour de 0, de façon à décider si une manoeuvre est nécessaire ou non. Plusieurs options sont possibles pour la définition de la fenêtre de contrôle : définie par une taille fixe ou par une périodicité équivalente (la taille réelle est alors dynamique et dépend du modèle d'évolution calculé à bord). La taille de la fenêtre peut aussi être nulle, auquel cas, le maintien à poste essaie de maintenir au mieux le paramètre contrôlé autour de la consigne.
Le calcul de la manoeuvre utilise également la date prévue pour la manoeuvre suivante en s'aidant des créneaux enregistrés.
Aucune manoeuvre n'est calculée si l'évolution naturelle du paramètre contrôlé tend à faire revenir ce paramètre dans la fenêtre après un certain temps. Cependant, dans certaines situations critiques (perturbations faibles), des manoeuvres complémentaires et bien que non optimales peuvent être optionnellement générées dans le cas où l'algorithme décide que trop de temps sera nécessaire avant de se rapprocher suffisamment de la fenêtre de façon naturelle.

• Vérification de la manoeuvre et critère d'exécution :

La manoeuvre pourra être exécutable si on prévoit que le prochain calcul de manoeuvre ne pourra pas générer une manoeuvre dans le même créneau tout en respectant les contraintes. On utilise le critère suivant (cohérent avec la détermination du créneau de manoeuvre) :

$$t > t_{deb-créneau} - D - marge,$$

où :

t : estimation de la date du prochain calcul, estimée sur la base des modèles bord, et du nombre de calculs par orbite,
$t_{deb-créneau}$ = date de début de créneau de manoeuvre,
marge : marge considérée dans l'évaluation, prenant également en compte la durée maximale des périodes d'indisponibilité des mesures du récepteur.

Si le critère ci-dessus est vrai, la manoeuvre peut être réalisée. Alors, différentes transformations sont effectuées sur la valeur calculée du ΔV :

- correction d'incertitude sur les modèles ou sur l'exécution de manoeuvre :

$$|\Delta V| = |\Delta V| - k1 * |\Delta Vmodel| - k_2 * |\Delta Vexec|,$$

où :

ΔVmodel : ΔV équivalent aux erreurs de modèle à la date de la prochaine manoeuvre (estimé en même temps que le ΔV),
ΔVexec : erreur a priori d'exécution de manoeuvre,

- correction de calibration.

Si des effets systématiques sont décelés, on a un intérêt à appliquer la correction prévue de la forme :

$$\left|\Delta V\right| \;=\; \alpha \;+\; \beta \;*\; \left|\Delta V\right|$$

- correction min/max

Le $|\Delta V|$ obtenu est comparé avec des valeurs minimales et maximales :

$$\left|\Delta V\right| \;>\; \left|\Delta V\right|_{max} \;=>\; \left|\Delta V\right| \;=\; \left|\Delta V\right|_{max}$$

$$\left|\Delta V\right| \;<\; \left|\Delta V\right|_{min} \;=>\; \left|\Delta V\right| \;=\; 0 \quad (\text{manœuvre non exécutée})$$

Les modèles long-terme du paramètre contrôlé et des paramètres d'orbite sont mis à jour quand une manoeuvre est exécutée. La manoeuvre prise en compte est celle envoyée préalablement pour exécution et qui a été alors mémorisée.
L'effet de la manoeuvre est pris en compte à la fois dans les termes polynomiaux des modèles et également dans la covariance de l'estimation grâce aux hypothèses d'erreur de manoeuvre a priori (erreur suivant la poussée et erreur perpendiculaire). Cette prise en compte de la manoeuvre dans les modèles évite de réinitialiser le filtrage après une manoeuvre et permet une diminution du temps nécessaire pour que les modèles soient de nouveau suffisamment bien estimés pour permettre le calcul de la manoeuvre suivante.

**Revendications**

1. Procédé de contrôle d'orbite autonome d'un satellite à l'aide d'un système embarqué de restitution de la position et de la vitesse, ou navigateur, **caractérisé en ce qu'**il comprend une étape de calcul de la (ou des) manoeuvre(s) de correction d'orbite en utilisant une orbite fournie par le navigateur et en prenant en compte au moins l'une des contraintes suivantes du système :

   • durée minimale séparant le calcul de la manoeuvre de sa date d'exécution,
   • durée minimale entre deux manoeuvres consécutives,
   • correction maximale autorisée,
   • variation maximale entre deux corrections successives,
   • créneaux autorisés de manoeuvres.

   et **en ce que** le calcul des manoeuvres est configurable, les données de configuration comprenant :

   - des paramètres de configuration de modèles,
   - des paramètres décrivant l'évolution théorique du (des) paramètres(s) contrôlé(s),
   - des paramètres d'erreur, ou des paramètres de réglage des traitements,
   - des contraintes de calcul de manoeuvre,
   - d'autres paramètres éventuels de configuration.

2. Procédé selon la revendication 1 comprenant une étape de calibration des manoeuvres.

3. Procédé selon la revendication 1, dans lequel les contraintes sont définies et modifiées à la demande.

**4.** Procédé selon la revendication 1, dans lequel les créneaux autorisés sont définis :

   • en temps,
   • ou en position sur l'orbite et numéro d'orbite.

**5.** Procédé selon la revendication 1 comprenant une étape de calcul des manoeuvres d'attitude nécessaires pour placer le satellite dans une orientation convenable pour effectuer une manoeuvre de correction d'orbite.

**6.** Procédé selon la revendication 1, dont l'étape de calcul des manoeuvres comprend :

   • une identification de modèles d'évolution des paramètres d'orbite et des paramètres de contrôle,
   • une prévision des manoeuvres calculées à partir de ces modèles et tenant compte des contraintes.

**7.** Procédé selon la revendication 6, dans lequel on obtient les modèles d'évolution par filtrage des paramètres d'orbite en provenance du navigateur.

**8.** Procédé selon la revendication 7, dans lequel on réalise le filtrage des paramètres d'orbite en deux étapes :

   - une étape de filtrage en fonction de la position sur l'orbite,
   - une étape de filtrage des résultats de l'étape précédente en fonction du temps.

**9.** Procédé selon la revendication 6, dans lequel on maintient les paramètres contrôlés dans une fenêtre.

**10.** Procédé selon la revendication 9, dans lequel la fenêtre est de dimension calculée dynamiquement.

**11.** Procédé selon la revendication 9, dans lequel, lorsque la dimension de la fenêtre est trop petite, on calcule les manoeuvres de telle sorte que l'évolution du paramètre soit centrée au mieux autour de la valeur nominale de celui-ci.

**12.** Procédé selon la revendication 6, dans lequel on prend en compte les manoeuvres calculées dans les modèles d'évolution et dans lequel on prend en compte des erreurs prévisibles de réalisation de manoeuvre dans la confiance accordée à ces modèles.

**13.** Procédé selon la revendication 6, dans lequel on tient compte des erreurs estimées de modèle ou des erreurs prévisibles de réalisation de manoeuvre dans le calcul de la manoeuvre.

**14.** Procédé selon la revendication 1, qui comprend les étapes suivantes :

   - analyse des données récepteur, transformation des paramètres (étape 20),
   - filtrage court terme des données, détermination des valeurs "mesurées" des paramètres à contrôler et des paramètres d'orbite moyens (étape 21),
   - calcul des écarts entre la valeur mesurée et la valeur théorique du paramètre contrôlé (étape 22),
   - filtrage long-terme des données, détermination des modèles polynomiaux fonction du temps pour les paramètres contrôlés et les paramètres d'orbite moyens (étape 23),
   - calcul de la manoeuvre avec détermination de la prochaine opportunité de manoeuvre (étape 24).

**15.** Procédé selon la revendication 14, dans lequel, pour un contrôle d'orbite, on choisit l'un des critères suivants : :

   - longitude des traces au sol,
   - orientation du plan de l'orbite,
   - position sur l'orbite,
   - excentricité de l'orbite.

**16.** Procédé selon la revendication 15, dans lequel on calcule des corrections d'orbite de façon à rapprocher l'excentricité de l'excentricité de consigne.

**17.** Procédé selon la revendication 14, dans lequel, pour un contrôle d'orbite, on utilise un critère élaboré par rapport à une trajectoire de référence.

**18.** Satellite comprenant un système embarqué de contrôle pour maintenir le satellite sur une orbite déterminée, ce système comprenant :

- un module (13) de génération des données de navigation (récepteur GPS ou autre),
- un module (11) de calcul de manoeuvre ($\Delta V$) comprenant le traitement des positions/vitesses et la détermination des modèles bord,
- un module (12) de calcul des commandes de manoeuvre effective et d'application de la manoeuvre, le calcul réalisé étant dépendant du satellite, **caractérisé en ce que** le module (11) de calcul de manoeuvre comprend des moyens de prise en compte d'au moins l'une des contraintes suivantes du système :

• durée minimale séparant le calcul de la manoeuvre de sa date d'exécution,
• durée minimale entre deux manoeuvres consécutives,
• correction maximale autorisée,
• variation maximale entre deux corrections successives,
• créneaux autorisés de manoeuvres,

et **en ce que** le module (11) de calcul de manoeuvre est configurable au moyen d'un module externe (10), les paramètres de configuration consistant en :

- des paramètres de configuration des modèles,
- des paramètres décrivant l'évolution théorique du (des) paramètre(s) contrôlé(s),
- des paramètres d'erreur, ou des paramètres de réglage des traitements,
- des contraintes du calcul de manoeuvre,
- d'autres paramètres éventuels de configuration.

**Claims**

**1.** A method of independent orbit control of a satellite using an onboard system for restoring position and speed, or navigator, **characterised in that** it includes a step of calculation of the orbit correction manoeuvre(s) using an orbit supplied by the navigator and taking into account at leat one of the following constraints of the system:

• a minimal duration separating the calculation of the manoeuvre and its date of execution,
• a minimal duration between two consecutive manoeuvres,
• a maximum authorised correction,
• a maximum variation between two successive corrections,
• authorised manoeuvre slots.

and **in that** the calculation of the manoeuvres can be configured, where the configuration data includes:

- parameters for configuring models,
- parameters describing the theoretical changes of the control parameter(s),
- error parameters, or process adjustment parameters,
- manoeuvre calculation constraints,
- any other possible configuration parameters.

**2.** A method according to claim 1 including a step of calibration of the manoeuvres.

**3.** A method according to claim 1, in which the constraints are defined and modified on request.

**4.** A method according to claim 1, in which the authorised slots are defined:

• in terms of time,
• in terms of position in the orbit and number of the orbit.

**5.** A method according to claim 1 including a step of calculation of attitude manoeuvres required to put the satellite into a suitable orientation to effect an orbit correction manoeuvre.

6. A method according to claim 1, the manoeuvre calculation step of which includes:

   • an identification of models for change of the orbit parameters and of the control parameters,
   • a forecast of the calculated manoeuvres using these models and taking account of the constraints.

7. A method according to claim 6, in which the change models are obtained by filtering the orbit parameters derived from the navigator.

8. A method according to claim 7, in which the orbit parameters are filtered in two steps:

   - a step of filtering according to the position in the orbit,
   - a step of filtering of the results of the previous step as a function of time.

9. A method according to claim 6, in which the controlled parameters are kept in a window.

10. A method according to claim 9, in which the dimensions of the window are calculated dynamically.

11. A method according to claim 9, in which, when the window dimensions are too small, the manoeuvres are calculated such that the change of the parameter is centred as far as possible around its nominal value.

12. A method according to claim 6, in which the manoeuvres calculated in the change models and in which predictable manoeuvre implementation errors are taken into account in the confidence placed in these models.

13. A method according to claim 6, in which account is taken of the estimated model errors or of the predictable manoeuvre implementation errors in calculating the manoeuvre.

14. A method according to claim 1, which includes the following steps:

   - analysis of the receiver data, transformation of the parameters (step 20),
   - short-term filtering of the data, determination of the "measured" values of the parameters to be controlled and of the average orbit parameters (step 21),
   - calculation of the discrepancies between the measured value and the theoretical value of the controlled parameter (step 22),
   - long-term filtering of the data, determination of the polynomial models as a function of time for the controlled parameters and the average orbit parameters (step 23),
   - calculation of the manoeuvre with determination of the next manoeuvre opportunity (step 24).

15. A method according to claim 14, in which, for an orbit control, one of the following criteria is chosen:

   - longitude of the ground tracks,
   - orientation of the orbit plane,
   - position in the orbit,
   - eccentricity of the orbit.

16. A method according to claim 15, in which the orbit corrections are calculated so as to approach the eccentricity of the eccentricity set point.

17. A method according to claim 14, in which a criterion produced relative to a reference trajectory is used for an orbit control.

18. A satellite including an onboard control system to maintain the satellite in a determined orbit, where this system includes:

   - a module (13) for generating navigation data (GPS receiver or other),
   - a module (11) for calculating the manoeuvre ($\Delta V$) including the processing of the positions/speeds and determining the onboard models,
   - a module (12) for calculating real manoeuvre commands and for applying the manoeuvre, where the calculation made is dependent on the satellite,

**characterised in that** the module (11) for calculating the manoeuvre includes means to take into account at least one of the following constraints of the system:

- the minimal duration separating the calculation of the manoeuvre and its date of execution,
- the minimal duration between two consecutive manoeuvres,
- the maximum authorised correction,
- the maximum variation between two successive corrections,
- the authorised manoeuvre slots,

and **in that** the module (11) for calculating the manoeuvres can be configured by means of an external module (10), where the configuration parameters consist of:

- parameters for configuring the models,
- parameters describing the theoretical changes of the controlled parameter(s),
- error parameters, or process adjustment parameters,
- manoeuvre calculation constraints,
- any other possible configuration parameters.

**Patentansprüche**

1. Verfahren zur autonomen Steuerung des Orbits eines Satelliten mit Hilfe eines eingebetteten Systems zur Wiederherstellung der Position und der Geschwindigkeit, oder auch Navigator, **dadurch gekennzeichnet, dass** es einen Schritt der Berechnung des (oder der) Orbitkorrekturmanöver(s) unter Verwendung eines vom Navigator gelieferten Orbits und unter Berücksichtigung wenigstens einer der nachfolgenden Bedingungen des Systems umfasst:

- Die minimale Dauer, die die Berechnung des Manövers von seinem Ausführungsdatum trennt,
- die minimale Dauer zwischen zwei aufeinanderfolgenden Manövern,
- die maximale autorisierte Korrektur,
- die maximale Variation zwischen zwei aufeinanderfolgenden Korrekturen,
- autorisierte Manöverlücken,

und dass die Berechnung der Manöver konfigurierbar ist, wobei die Konfigurationsdaten umfassen:

- Modellkonfigurationsparameter,
- Parameter, die die theoretische Entwicklung des (der) Steuerparameter(s) beschreiben,
- Fehlerparameter, oder Verarbeitungsregelparameter,
- Manöverberechnungsbedingungen,
- andere eventuelle Konfigurationsparameter.

2. Verfahren nach Anspruch 1, umfassend einen Schritt zur Kalibrierung der Manöver.

3. Verfahren nach Anspruch 1, bei dem die Bedingungen auf Wunsch definiert und modifiziert werden.

4. Verfahren nach Anspruch 1, bei dem die autorisierten Lücken definiert sind:

- Hinsichtlich der Zeiten,
- oder hinsichtlich der Position auf dem Orbit und der Orbitnummer.

5. Verfahren nach Anspruch 1, umfassend einen Schritt der Berechnung der Einstellungsmanöver, die erforderlich sind, um den Satelliten in einer Orientierung zu platzieren, die geeignet ist, um ein Orbitkorrekturmanöver durchzuführen.

6. Verfahren nach Anspruch 1, bei dem der Schritt zur Berechnung der Manöver umfasst:

- Eine Identifizierung von Entwicklungsmodellen der Orbitparameter und der Steuerparameter,
- eine Vorhersage der berechneten Manöver ausgehend von diesen Modellen unter Berücksichtigung der Bedingungen.

7. Verfahren nach Anspruch 6, bei dem man die Entwicklungsmodelle durch Filterung der vom Navigator stammenden Orbitparameter erhält.

8. Verfahren nach Anspruch 7, bei dem man die Filterung der Orbitparameter in zwei Schritten realisiert:

   - Einem Schritt der Filterung als Funktion der Position auf dem Orbit,
   - einen Schritt der Filterung der Ergebnisse des vorhergehenden Schritts als Funktion der Zeit.

9. Verfahren nach Anspruch 6, bei dem man die Parameter in einem Fenster gesteuert aufrechterhält.

10. Verfahren nach Anspruch 9, bei dem das Fenster eine dynamisch berechnete Dimension hat.

11. Verfahren nach Anspruch 9, bei dem dann, wenn die Dimension des Fensters zu klein ist, man die Manöver derart berechnet, dass die Entwicklung des Parameters am besten um den Nominalwert desselben herum zentriert ist.

12. Verfahren nach Anspruch 6, bei dem man die berechneten Manöver bei den Entwicklungsmodellen berücksichtigt, und bei dem man vorhersehbare Fehler bei der Realisierung des Manövers bei der Zuverlässigkeit berücksichtigt, die diesen Modellen zugewiesen wird.

13. Verfahren nach Anspruch 6, bei dem man die abgeschätzten Modellfehler oder die vorhersehbaren Fehler bei der Ausführung des Manövers in der Berechnung des Manövers berücksichtigt.

14. Verfahren nach Anspruch 1, das die folgenden Schritte umfasst:

   - Eine Analyse der Empfängerdaten, eine Transformation der Parameter (Schritt 20),
   - eine Kurzzeitfilterung der Daten, eine Bestimmung der "gemessenen" Werte der zu steuernden Parameter und der mittleren Orbitparameter (Schritt 21),
   - eine Berechnung der Abstände zwischen dem gemessenen Wert und dem theoretischen Wert des gesteuerten Parameters (Schritt 22),
   - eine Langzeitfilterung der Daten, eine Bestimmung von Polynommodellen als Funktion der Zeit für die gesteuerten Parameter und die mittleren Orbitparameter (Schritt 23),
   - eine Berechnung des Manövers mit einer Bestimmung der nächsten Manövergelegenheit (Schritt 24).

15. Verfahren nach Anspruch 14, bei dem man für eine Steuerung des Orbits eines der folgenden Kriterien auswählt:

   - Die Länge der Bahnen auf der Erde,
   - die Orientierung der Ebene des Orbits,
   - die Position auf dem Orbit,
   - die Exzentrizität des Orbits.

16. Verfahren nach Anspruch 15, bei dem man Orbitkorrekturen derart berechnet, dass sich die Exzentrizität dem Sollwert der Exzentrizität nähert.

17. Verfahren nach Anspruch 14, bei dem man für eine Orbitsteuerung ein Kriterium verwendet, das bezüglich einer Referenztrajektorie ausgearbeitet wurde.

18. Satellit, umfassend ein eingebettetes Steuersystem zum Halten des Satellits auf einem bestimmten Orbit, wobei dieses System umfasst:

   - ein Modul (13) zur Erzeugung von Navigationsdaten (GPS-Empfänger oder anderes),
   - ein Modul (11) zur Manöverberechnung ($\Delta V$) umfassend die Verarbeitung von Positionen/Geschwindigkeiten und die Bestimmung von Bordmodellen,
   - ein Modul (12) zur Berechnung von Effektivmanöverbefehlen und zur Abwendung des Manövers, wobei die durchgeführte Berechnung vom Satelliten ablängt,

   **dadurch gekennzeichnet, dass** das Modul (11) zur Berechnung des Manövers Mittel zur Berücksichtigung wenigstens einer der nachfolgenden Systembedingungen umfasst:

• Die minimale Dauer, die die Berechnung des Manövers von seinem Ausführungsdatum trennt,
• die minimale Dauer zwischen zwei aufeinanderfolgenden Manövern,
• die maximale autorisierte Korrektur,
• die maximale Variation zwischen zwei aufeinanderfolgenden Korrekturen,
• autorisierte Manöverlücken,

und dass das Modul (11) zur Berechnung des Manövers mittels eines externen Moduls (10) konfigurierbar ist, wobei die Konfigurationsparameter umfassen:

- Modellkonfigurationsparameter,
- Parameter, die die theoretische Entwicklung des (der) Steuerparameter(s) beschreiben,
- Fehlerparameter, oder Verarbeitungsregelparameter,
- Manöverberechnungsbedingungen,
- andere eventuelle Konfigurationsparameter.

10 —

TC

13

TM

11

14

12

# FIG. 1

E

# FIG. 2

| ANALYSE DES DONNEES RECEPTEUR<br>GENERATION DES PARAMETRES D'ORBITE | 20 |

| FILTRAGE COURT-TERME DES DONNEES | 21 |

| CALCUL DES ECARTS ENTRE LA VALEUR MESUREE<br>ET LA VALEUR THEORIQUE DU PARAMETRE CONTROLE | 22 |

| FILTRAGE LONG-TERME DES DONNEES | 23 |

| CALCUL DE LA MANOEUVRE | 24 |

**EP 1 288 760 B1**

## RÉFÉRENCES CITÉES DANS LA DESCRIPTION

**Documents brevets cités dans la description**

- FR 2784472 A

- EP 0496879 A